(19) Europäisches Patentamt
European Patent Office
Office européen des brevets

(11) **EP 4 715 635 A1**

(12) **EUROPEAN PATENT APPLICATION**
published in accordance with Art. 153(4) EPC

(43) Date of publication:
**25.03.2026 Bulletin 2026/13**

(21) Application number: **24830703.5**

(22) Date of filing: **24.06.2024**

(51) International Patent Classification (IPC):
*G06F 17/16* (2006.01)

(52) Cooperative Patent Classification (CPC):
**G06F 17/16**

(86) International application number:
**PCT/CN2024/101040**

(87) International publication number:
**WO 2025/002061 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.06.2023 CN 202310781382
22.09.2023 CN 202311240428

(71) Applicant: **Huawei Technologies Co., Ltd.
Shenzhen, Guangdong 518129 (CN)**

(72) Inventors:
• **ZHANG, Yanzhe
Shenzhen, Guangdong 518129 (CN)**
• **CAO, Li
Shenzhen, Guangdong 518129 (CN)**
• **YI, Fei
Shenzhen, Guangdong 518129 (CN)**
• **WANG, Gongyi
Shenzhen, Guangdong 518129 (CN)**
• **LIN, Tengyi
Shenzhen, Guangdong 518129 (CN)**
• **LU, Xiao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SPARSE MATRIX OPERATION METHOD AND APPARATUS, AND COMPUTING DEVICE**

(57)    Embodiments disclosed in this application relate to the field of computing technologies, and in particular, to a sparse matrix operation method, a processor, and a computing device. The processor includes a sparse matrix processing unit and a sparse vector operation unit. The operation method performed by the processor includes: The sparse matrix processing unit obtains a first data matrix and a first index matrix that correspond to a first sparse matrix, and a second data matrix and a second index matrix that correspond to a second sparse matrix. The sparse vector operation unit determines, based on each row of elements in the first index matrix and each column of elements included in the second index matrix, target elements on which a dot product operation needs to be performed in each row of elements in the first data matrix and each column of elements in the second data matrix, and performs a dot product operation on the target elements, to obtain a first result matrix of performing a sparse multiplication operation on the first sparse matrix and the second sparse matrix. According to this application, a quantity of zero elements participating in sparse matrix multiplication can be reduced, and efficiency of performing sparse matrix multiplication can be improved.

A sparse matrix processing unit inputs, to a sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit — 501

The sparse vector operation unit determines, based on each row of non-zero elements in the first index matrix and each column of non-zero elements included in the second index matrix, target elements on which a dot product operation needs to be performed in each row of non-zero elements in the first data matrix and each column of non-zero elements in the second data matrix, and performs a dot product operation on the target elements, to obtain a first result matrix of performing a sparse multiplication operation on the first sparse matrix and the second sparse matrix — 502

FIG. 5

EP 4 715 635 A1

## Description

This application claims priorities to Chinese Patent Application No. 202310781382.5, filed on June 28, 2023 and entitled "SPARSE MATRIX MULTIPLICATION METHOD", and to Chinese Patent Application No. 202311240428.9, filed on September 22, 2023 and entitled "SPARSE MATRIX OPERATION METHOD, APPARATUS, AND COMPUTING DEVICE", both of which are incorporated herein by reference in their entireties.

## TECHNICAL FIELD

This application relates to the field of computing technologies, and in particular, to a sparse matrix operation method, a processor, and a computing device.

## BACKGROUND

Matrix multiplication is widely applied to various scientific computing scenarios. Matrix density varies in different computing scenarios, and matrix multiplication is mainly classified into dense matrix multiplication and sparse matrix multiplication. Usually, dense matrix multiplication is mainly applied to scenarios such as conventional machine learning and neural network model computation, and sparse matrix multiplication is mainly applied to scenarios such as graph computation, graph neural networks, and multigrid solving.

Because a sparse matrix includes a large quantity of zero elements, in a process of performing sparse matrix multiplication, the large quantity of zero elements participate in a matrix multiplication operation. Consequently, matrix operation efficiency is low.

## SUMMARY

Embodiments of this application provide a sparse matrix operation method, a processor, and a computing device, to improve execution efficiency of sparse matrix multiplication. Corresponding technical solutions are as follows:

According to a first aspect, a sparse matrix operation method is provided. The method is performed by a processor including a sparse matrix processing unit and a sparse vector operation unit. The method includes:

The sparse matrix processing unit inputs, to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit, where each non-zero element in the first index matrix indicates a column number corresponding to a non-zero element at a same position in the first data matrix, and each non-zero element in the second index matrix indicates a row number corresponding to a non-zero element at a same position in the second data matrix. The sparse vector operation unit determines, based on each row of non-zero elements in the first index matrix and each column of non-zero elements included in the second index matrix, target elements on which a dot product operation needs to be performed in each row of non-zero elements in the first data matrix and each column of non-zero elements in the second data matrix, and performs a dot product operation on the target elements, to obtain a first result matrix of performing a sparse multiplication operation on the first sparse matrix and the second sparse matrix.

The first data matrix is obtained by compressing non-zero elements in the first sparse matrix in a row direction, and the second data matrix is obtained by compressing non-zero elements in the second sparse matrix in a column direction. In the solution provided in this application, the sparse matrix processing unit may determine, based on row numbers and column numbers separately indicated by each row of non-zero elements in the first index matrix and each column of non-zero elements in the second index matrix, the target elements on which a dot product operation needs to be performed in the first data matrix and the second data matrix, and perform the dot product operation on the target elements, to obtain the first result matrix of performing the sparse multiplication operation on the first sparse matrix and the second sparse matrix. It can be learned that, in the solution shown in this application, an operation on a large quantity of zero elements in a sparse multiplication operation process can be avoided, and efficiency of performing the sparse multiplication operation by the processor can be improved.

In an implementation, that the sparse vector operation unit determines, based on each row of elements included in the first index matrix and each row of elements included in the second index matrix, the target elements on which a dot product operation needs to be performed in each row of elements in the first data matrix and each row of elements in the second data matrix, and performs the dot product operation on the target elements, to obtain the first result matrix of performing the sparse multiplication operation on the first sparse matrix and the second sparse matrix includes:

The sparse vector operation unit determines a first position in an $m^{th}$ row of the first index matrix and a second position in an $n^{th}$ column of the second index matrix that are of a same non-zero element included in the $m^{th}$ row and the $n^{th}$ column; and performs a dot product operation on a target element at the first position in an $m^{th}$ row of the first data matrix and a target element at the second position in an $n^{th}$ column of the second data matrix, to obtain an element in an $m^{th}$ row and an $n^{th}$ column in the first result matrix.

In an implementation, the method further includes: The sparse matrix processing unit obtains a third data matrix and a third index matrix that correspond to a third sparse matrix, and a fourth data matrix and a fourth index matrix that correspond to a fourth sparse matrix, where the third data matrix includes a plurality of first data matrix tiles, the third index matrix includes a first index matrix tile corresponding to each first data matrix tile, the fourth data matrix includes a plurality of second data matrix tiles, and the fourth index matrix includes a plurality of second index matrix tiles corresponding to each second data matrix tile. The sparse matrix processing unit determines a Cartesian product of a first data matrix tile of a non-zero matrix tile in an $i^{th}$ row of the third data matrix and a second data matrix tile of a non-zero matrix tile in a $j^{th}$ column of the fourth data matrix.

Before the sparse matrix processing unit inputs, to the sparse vector operation unit, the first data matrix and the first index matrix that correspond to the first sparse matrix and that are obtained through processing by the sparse matrix processing unit, and the second data matrix and the second index matrix that correspond to the second sparse matrix and that are obtained through processing by the sparse matrix processing unit, the method further includes: The sparse matrix processing unit determines that a first data matrix tile and a second data matrix tile that are included in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

In an implementation, the method further includes: The sparse matrix processing unit performs summation on first result matrices corresponding to all groups of data matrix tiles included in the Cartesian product, to obtain a matrix tile in an $i^{th}$ row and a $j^{th}$ column in a second result matrix of performing a sparse multiplication operation on the third sparse matrix and the fourth sparse matrix.

In the solution shown in this application, the sparse matrix processing unit compresses the third sparse matrix and the fourth sparse matrix on which the sparse multiplication operation is performed into the third data matrix, the third index matrix, the fourth data matrix, and the fourth index matrix, and partitions the third data matrix, the third index matrix, the fourth data matrix, and the fourth index matrix, to obtain a plurality of first data matrix tiles, second data matrix tiles, first index matrix tiles, and second index matrix tiles. In this way, the second result matrix is calculated based on the data matrix tiles and the index matrix tiles, so that a zero matrix tile can be prevented from participating in a sparse multiplication operation process, and efficiency of performing the sparse multiplication operation by the processor can be improved.

In addition, each group of data matrix tiles included in the Cartesian product is a first data matrix tile and a second data matrix tile on which a matrix multiplication operation is performed. The first data matrix tile is determined as the first data matrix, the second data matrix tile is determined as the second data matrix, and an operation on the first data matrix tile and the second data matrix tile is performed according to the foregoing operation method for computation on the first data matrix and the second data matrix, so that the efficiency of performing the sparse multiplication operation by the processor can be further improved.

In an implementation, the third data matrix includes L×M first data matrix blocks, each first data matrix block includes at least one first data matrix tile, the third index matrix includes L×M third index matrix blocks, and each first index matrix block includes at least one first index matrix tile. The fourth data matrix includes M×N second data matrix blocks, each second data matrix block includes at least one second data matrix tile, the fourth index matrix includes M×N second index matrix blocks, and each second index matrix block includes at least one second index matrix tile.

In the solution shown in this application, the third data matrix, the third index matrix, the fourth data matrix, and the fourth index matrix may be partitioned, so that the second result matrix corresponding to the third sparse matrix and the fourth sparse matrix may be calculated based on the first data matrix block, the first index matrix block, the second data matrix block, and the second index matrix block. A zero matrix block in the first data matrix block and the second data matrix block may not participate in the operation, so that the efficiency of performing the sparse multiplication operation by the processor can be improved.

In an implementation, the method further includes: The sparse matrix processing unit determines, based on a first position of a zero matrix block of the L×M first data matrix blocks in the third data matrix, a second position of a non-zero matrix block of the L×M first data matrix blocks in the third data matrix, a third position of a zero matrix block of the M×N second data matrix blocks in the fourth data matrix, and a fourth position of a non-zero matrix block of the M×N second data matrix blocks in the fourth data matrix, a quantity of non-zero matrix blocks in L×N matrix blocks included in the second result matrix; and applies, based on the quantity of non-zero matrix blocks, for storage space in a memory for the second result matrix.

In the solution shown in this application, the storage space is applied for in the memory for the second result matrix based on the quantity of non-zero matrix blocks included in the second result matrix. In an aspect, storage space occupied by the second result matrix can be reduced. In another aspect, position correspondence determining is performed based on positions of zero matrix blocks and non-zero matrix blocks in the first data matrix blocks and the second data matrix blocks, and the quantity of non-zero matrix blocks included in the second result matrix is determined, so that complexity of position correspondence determining can be reduced.

In an implementation, that the sparse matrix processing unit determines the Cartesian product of the first data matrix tile of the non-zero matrix tile in the $i^{th}$ row of the third data matrix and the second data matrix tile of the non-zero matrix tile in the $j^{th}$ column of the fourth data matrix includes: If determining that a $k^{th}$ first data matrix tile group in the $i^{th}$ row and a $k^{th}$ second data matrix tile group in the $j^{th}$ column satisfy an operation condition, the sparse matrix processing unit determines a Cartesian product of a first data matrix tile of each non-zero matrix tile and a second data matrix tile of each non-zero matrix tile that are included in the $k^{th}$ first data matrix tile group and the $k^{th}$ second data matrix tile group. The first data matrix tile group includes a first data matrix tile that is in a same first data matrix block and that is in the $i^{th}$ row, the second data matrix tile group includes a second data matrix tile that is in a same second data matrix block and that is in the $j^{th}$ column, and the operation condition is that both the first data matrix tile group and the second data matrix tile group include non-zero matrix tiles.

In the solution shown in this application, the sparse matrix processing unit performs position correspondence determining on data matrix tile groups, so that a data matrix tile that is not a non-zero data matrix tile can be prevented from participating in the sparse multiplication operation, and the efficiency of performing the sparse multiplication operation by the processor can be improved.

According to a second aspect, a processor is provided. The processor includes a sparse matrix processing unit and a sparse vector operation unit.

The sparse matrix processing unit is configured to input, to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit, where each non-zero element in the first index matrix indicates a column number corresponding to a non-zero element at a same position in the first data matrix, and each non-zero element in the second index matrix indicates a row number corresponding to a non-zero element at a same position in the second data matrix.

The sparse vector operation unit is configured to: determine, based on each row of elements included in the first index matrix and each row of elements included in the second index matrix, target elements on which a dot product operation needs to be performed in each row of elements in the first data matrix and each row of elements in the second data matrix, and perform a dot product operation on the target elements, to obtain a first result matrix of performing a sparse multiplication operation on the first sparse matrix and the second sparse matrix.

In an implementation, the sparse vector operation unit is configured to determine a first position in an $m^{th}$ row of the first index matrix and a second position in an $n^{th}$ row of the second index matrix that are of a same element included in the $m^{th}$ row and the $n^{th}$ row.

The sparse vector operation unit is configured to perform a dot product operation on a target element at the first position in an $m^{th}$ row of the first data matrix and a target element at the second position in an $n^{th}$ row of the second data matrix, to obtain an element in an $m^{th}$ row and an $n^{th}$ column in the first result matrix.

In an implementation, the sparse matrix processing unit is configured to obtain a third data matrix and a third index matrix that correspond to a third sparse matrix, and a fourth data matrix and a fourth index matrix that correspond to a fourth sparse matrix, where the third data matrix includes a plurality of first data matrix tiles, the third index matrix includes a first index matrix tile corresponding to each first data matrix tile, the fourth data matrix includes a plurality of second data matrix tiles, and the fourth index matrix includes a plurality of second index matrix tiles corresponding to each second data matrix tile.

The sparse matrix processing unit is configured to determine a Cartesian product of a first data matrix tile of a non-zero matrix tile in an $i^{th}$ row of the third data matrix and a second data matrix tile of a non-zero matrix tile in a $j^{th}$ column of the fourth data matrix.

The sparse matrix processing unit is further configured to determine that a first data matrix tile and a second data matrix tile that are included in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

The sparse matrix processing unit is further configured to perform summation on first result matrices corresponding to all groups of data matrix tiles included in the Cartesian product, to obtain a matrix tile in an $i^{th}$ row and a $j^{th}$ column in a second result matrix of performing a sparse multiplication operation on the third sparse matrix and the fourth sparse matrix.

In an implementation, the third data matrix includes $L \times M$ first data matrix blocks, each first data matrix block includes at least one first data matrix tile, the third index matrix includes $L \times M$ third index matrix blocks, and each first index matrix block includes at least one first index matrix tile.

The fourth data matrix includes $M \times N$ second data matrix blocks, each second data matrix block includes at least one second data matrix tile, the fourth index matrix includes $M \times N$ second index matrix blocks, and each second index matrix block includes at least one second index matrix tile.

In an implementation, the sparse matrix processing unit is configured to determine, based on a first position of a zero matrix block of the $L \times M$ first data matrix blocks in the third data matrix, a second position of a non-zero matrix block of the $L \times M$ first data matrix blocks in the third data matrix, a third position of a zero matrix block of the $M \times N$ second data matrix blocks in the fourth data matrix, and a fourth position of a non-zero matrix block of the M×N second data matrix blocks in the fourth data matrix, a quantity of non-zero matrix blocks in L×N matrix blocks included in the second result matrix.

The sparse matrix processing unit is configured to apply, based on the quantity of non-zero matrix blocks, for storage space in a memory for the second result matrix.

In an implementation, that the sparse matrix processing unit is configured to determine the Cartesian product of the first data matrix tile of the non-zero matrix tile in the $i^{th}$ row of the third data matrix and the second data matrix tile of the non-zero matrix tile in the $j^{th}$ column of the fourth data matrix includes:

The sparse matrix processing unit is configured to: if determining that a $k^{th}$ first data matrix tile group in the $i^{th}$ row and a $k^{th}$ second data matrix tile group in the $j^{th}$ column satisfy an operation condition, determine a Cartesian product of a first data matrix tile of each non-zero matrix tile and a second data matrix tile of each non-zero matrix tile that are included in the $k^{th}$ first data matrix tile group and the $k^{th}$ second data matrix tile group.

The first data matrix tile group includes a first data matrix tile that is in a same first data matrix block and that is in the $i^{th}$ row, the second data matrix tile group includes a second data matrix tile that is in a same second data matrix block and that is in the $j^{th}$ column, and the operation condition is that both the first data matrix tile group and the second data matrix tile group include non-zero matrix tiles.

According to a third aspect, a computing device is provided. The computing device includes a memory and the processor according to the second aspect. The memory stores at least one instruction, and the processor executes the at least one instruction to perform the method according to any one of the first aspect and/or the implementations of the first aspect.

According to a fourth aspect, a computer-readable storage medium is provided. The computer-readable storage medium stores computer program code. When the computer program code is executed by a computer device, the computer device is enabled to perform the method according to any one of the first aspect and/or the implementations of the first aspect.

According to a fifth aspect, a computer program product including instructions is provided. When the computer program product runs on a computing device, the computing device is enabled to perform the method according to any one of the first aspect and/or the implementations of the first aspect.

**BRIEF DESCRIPTION OF DRAWINGS**

FIG. 1 is a diagram of performing a matrix multiplication operation in a related technology;
FIG. 2 is a diagram of a structure of a computing device according to an embodiment of this application;
FIG. 3 is a diagram of compressing a sparse matrix according to an embodiment of this application;
FIG. 4 is a diagram of compressing a sparse matrix according to an embodiment of this application;
FIG. 5 is a flowchart of a sparse matrix operation method according to an embodiment of this application;
FIG. 6 is a diagram of a structure of a processor according to an embodiment of this application;
FIG. 7 is a flowchart of a sparse matrix operation method according to an embodiment of this application;
FIG. 8 is a diagram of a sparse matrix operation method according to an embodiment of this application;
FIG. 9 is a diagram of a sparse matrix operation method according to an embodiment of this application; and
FIG. 10 is a diagram of a sparse matrix operation method according to an embodiment of this application.

**DESCRIPTION OF EMBODIMENTS**

To make objectives, technical solutions, and advantages of this application clearer, the following further describes in detail implementations of this application with reference to accompanying drawings.

Matrix multiplication is widely applied to various scientific computing scenarios. Matrix density varies in different computing scenarios, and matrix multiplication is mainly classified into dense matrix multiplication and sparse matrix multiplication. Usually, dense matrix multiplication is mainly applied to scenarios such as conventional machine learning and neural network model computation, and sparse matrix multiplication is mainly applied to scenarios such as graph computation, graph neural networks, and multigrid solving.

Dense matrix multiplication means that matrices on which a matrix multiplication operation is performed are dense matrices, and sparse matrix multiplication means that matrices on which a matrix multiplication operation is performed are sparse matrices. The sparse matrix is a matrix whose non-zero elements account for a very small percentage (for example, less than 5%) of all elements, and the dense matrix is a matrix whose non-zero elements account for a large percentage of all elements.

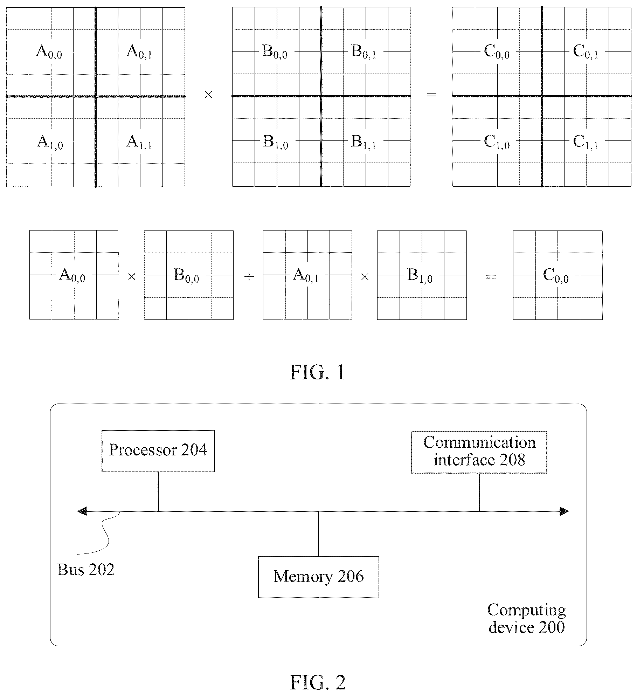

Currently, an optimization method for a matrix multiplication operation is only effective for dense matrix multiplication. For example, tiling (tiling) may be performed on matrices on which a matrix multiplication operation is performed, and then a result matrix of the matrix multiplication operation is computed based on tile matrices obtained through tiling. FIG. 1 is a diagram of performing a matrix multiplication operation in a related technology. As shown in FIG. 1, for a matrix A and a matrix B on which a matrix multiplication operation is performed, the matrix A may be divided into a tile matrix $A_{0,0}$, a tile matrix $A_{0,1}$, a tile matrix $A_{1,0}$, and a tile matrix $A_{1,1}$, and the matrix B may be divided into a tile matrix $B_{0,0}$, a tile matrix $B_{0,1}$, a tile matrix $B_{1,0}$, and a tile matrix $B_{1,1}$. For a result matrix C of performing the matrix multiplication operation on the matrix A and the matrix B, the matrix C may be divided into a tile matrix $C_{0,0}$, a tile matrix $C_{0,1}$, a tile matrix $C_{1,0}$, and a tile matrix $C_{1,1}$. Computation of the tile matrix $C_{0,0}$ is used as an example. The tile matrix $C_{0,0}$ is equal to a sum of a product of the tile matrix $A_{0,0}$ and the tile matrix $B_{0,0}$ and a product of the tile matrix $A_{0,1}$ and the tile matrix $B_{0,1}$. In this way, complexity of the matrix multiplication operation can be reduced by reducing a size of the matrix, thereby improving efficiency of the matrix multiplication operation.

However, for the sparse matrix, because there are a large quantity of zero elements in the sparse matrix, even after tiling is performed on the sparse matrix, there are still a large quantity of zero elements in an obtained tile matrix, and even there is a tile matrix that is a zero matrix. In this way, in a process of performing a matrix multiplication operation, a large quantity of zero elements always participate in the operation, and a large quantity of computing resources and storage resources are occupied. Consequently, execution efficiency of sparse matrix multiplication is low.

Embodiments of this application provide a sparse matrix operation method, so that sparse matrix multiplication can be optimized with reference to a feature of a sparse matrix, and execution efficiency of sparse matrix multiplication can be further improved. FIG. 2 is a computing device for performing the sparse matrix operation method according to an embodiment of this application. As shown in FIG. 2, the computing device 200 may include a bus 202, a processor 204, and a memory 206. Optionally, the computing device 200 may further include a communication interface 208. The processor 204, the memory 206, and the communication interface 208 communicate with each other through the bus 202. The computing device 200 may be a server or a terminal device. It should be understood that quantities of processors and memories in the computing device 200 are not limited in this application. The computing device 200 may be a device for running a model, and may be a terminal or a server. When the computing device 200 is a terminal, the computing device 200 includes but is not limited to a desktop computer, a mobile phone, a notebook computer, and a tablet computer. When the computing device 200 is a server, the computing device 200 may be an independent server, may be a server cluster including a plurality of servers, may be a physical entity machine, or may be a virtual machine, a container, or the like that is virtualized by using a virtualization technology.

The bus 202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 2, but this does not mean that there is only one bus or one type of bus. The bus 202 may include a path for transferring information between components (for example, the memory 206, the processor 204, and the communication interface 208) in the computing device 200.

The processor 204 may include any one or more of processors such as a central processing unit (central processing unit, CPU), a graphics processing unit (graphics processing unit, GPU), a microprocessor (microprocessor, MP), and a digital signal processor (digital signal processor, DSP). The processor 204 may further include operation units such as a vector operation unit and a matrix operation unit. The vector operation unit may be a scalable vector extension (Scalable Vector Extension, SVE), and may be configured to perform a vector operation in sparse matrix multiplication. The matrix operation unit may be a scalable matrix unit (Scalable Matrix Unit, SME), and may be configured to perform a matrix operation in sparse matrix multiplication.

The processor 204 includes one or more processor cores (core). Instructions that can be processed by the processor core include an SIMD instruction, an SVE instruction, an SME instruction, and the like. When processing different instructions, the processor core uses different data types and performs different computations. For example, when processing the SIMD instruction, the processor core processes data (for example, integer data or floating-point data) with a fixed length, and performs addition, subtraction, or another computation on the data. For another example, when processing the SVE instruction, the processor core processes data (for example, integer data or floating-point data) with a variable length, and performs addition, subtraction, or another computation on the data. For another example, when processing the SME instruction, the processor performs matrix computation on a matrix (for example, computes a matrix inner product or a matrix outer product). In embodiments of this application, the instructions that can be processed by the processor may further include a sparse scalable vector extension (Sparse SVE, SPSVE) instruction. When processing the SPSVE instruction, the processor core may implement the sparse vector operation method provided in embodiments of this application.

The memory 206 may include a volatile memory (volatile memory), for example, a random access memory (random access memory, RAM). The memory 206 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 206 stores executable program code, and the processor 204 executes the executable program code to implement the sparse matrix operation method provided in embodiments of this application.

The communication interface 208 uses a transceiver module, for example, but not limited to, a network interface card or a transceiver, to implement communication between the computing device 200 and another device or a communication network.

For ease of understanding the sparse matrix operation method provided in embodiments of this application, the following first describes a sparse compressed tile matrix used in embodiments of this application.

The sparse compressed tile matrix includes a data (Data) matrix and an index (Index) matrix. The data matrix is obtained by separately arranging zero elements and non-zero elements in the sparse matrix consecutively row-wise or column-wise.

In an example, non-zero elements and zero elements included in each row (column) of the sparse matrix may be separately rearranged consecutively, to obtain the data matrix corresponding to the sparse matrix. Sizes of the index matrix and the data matrix are the same, and a distribution of zero elements and non-zero elements in the index matrix is consistent with a distribution of zero elements and non-zero elements in the data matrix. When the zero elements and the non-zero elements in the sparse matrix are consecutively rearranged row-wise to obtain the corresponding data matrix, each non-zero element in the index matrix indicates a column number, in the sparse matrix, of a non-zero element at a same position in the data matrix. When the zero elements and the non-zero elements in the sparse matrix are consecutively rearranged column-wise to obtain the corresponding data matrix, each non-zero element in the index matrix indicates a row number, in the sparse matrix, of a non-zero element at a same position in the data matrix. Separately rearranging the non-zero elements and the zero elements consecutively may be arranging the non-zero elements before the zero elements, or arranging the non-zero elements after the zero elements.

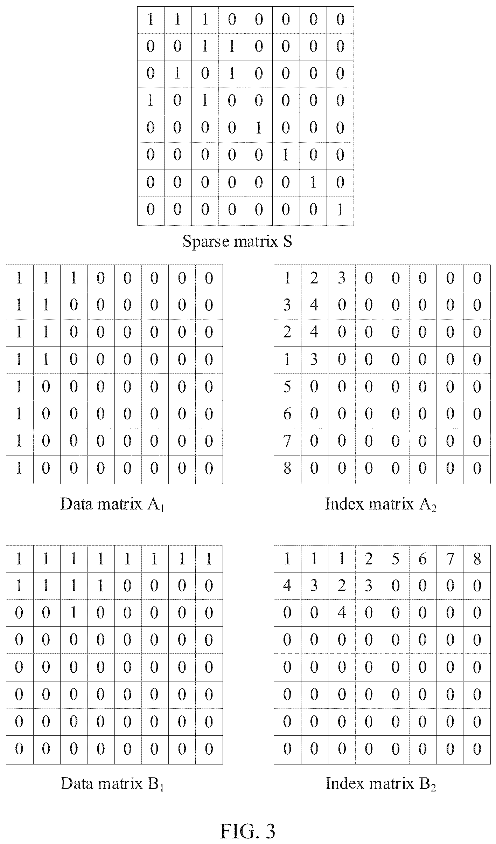

As shown in FIG. 3, for a sparse matrix S, if non-zero elements and zero elements are consecutively rearranged row-wise, a corresponding data matrix $A_1$ and a corresponding index matrix $A_2$ may be obtained. If the non-zero elements and the zero elements are consecutively rearranged column-wise, a corresponding data matrix $B_1$ and a corresponding index matrix $B_2$ may be obtained. For example, a value in a $3^{rd}$ row and a $1^{st}$ column in the index matrix $A_2$ indicates that an element in a $3^{rd}$ row and a $1^{st}$ column in the data matrix $A_1$ is in a $2^{nd}$ column of the sparse matrix S. For another example, a value in a $3^{rd}$ row and a $3^{rd}$ column in the index matrix $B_2$ indicates that an element in a $3^{rd}$ row and a $3^{rd}$ column in the data matrix $B_1$ is in a $4^{th}$ column of the sparse matrix S.

In another example, the sparse matrix may be first partitioned, and then non-zero elements and zero elements in each row (column) in a matrix block (block) corresponding to each partition are separately rearranged consecutively, to obtain the data matrix corresponding to the sparse matrix. Sizes of the index matrix and the data matrix are the same, and a distribution of zero elements and non-zero elements in the index matrix is consistent with a distribution of zero elements and non-zero elements in the data matrix. When zero elements and non-zero elements in the matrix block corresponding to each partition in the sparse matrix are consecutively rearranged row-wise to obtain the corresponding data matrix, each non-zero element in the index matrix indicates a column number, in the matrix block in the sparse matrix, of a non-zero element at a same position in the data matrix. When zero elements and non-zero elements in the matrix block corresponding to each partition in the sparse matrix are consecutively rearranged column-wise to obtain the corresponding data matrix, each non-zero element in the index matrix indicates a row number, in the matrix block in the sparse matrix, of a non-zero element at a same position in the data matrix.

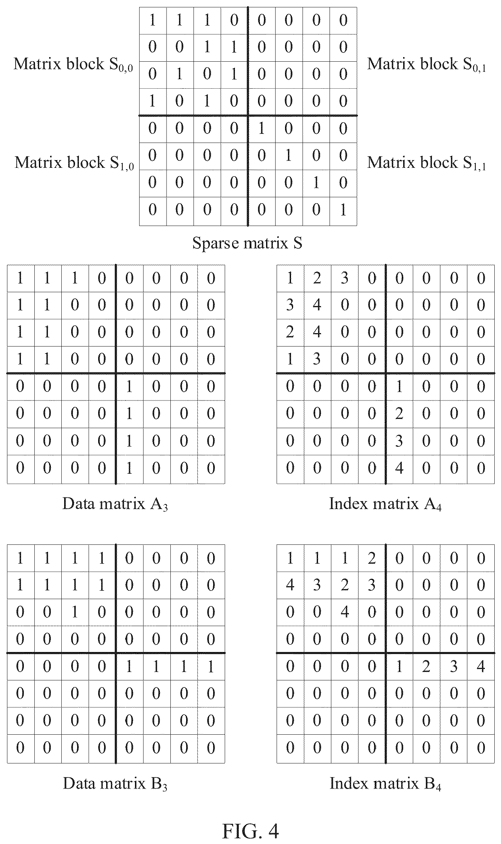

As shown in FIG. 4, for a sparse matrix S, the sparse matrix S may be divided into four partitions, where the four partitions correspond to a matrix block $S_{0,0}$, a matrix block $S_{0,1}$, a matrix block $S_{1,0}$, and a matrix block $S_{1,1}$. If non-zero elements and zero elements in each matrix block are consecutively rearranged row-wise, a corresponding data matrix $A_3$ and a corresponding index matrix $A_4$ may be obtained. If non-zero elements and zero elements in each matrix block are consecutively rearranged column-wise, a corresponding data matrix $B_3$ and a corresponding index matrix $B_4$ may be obtained. For example, a value in a $5^{th}$ row and a $5^{th}$ column in the index matrix $A_4$ indicates that an element in a $5^{th}$ row and a $5^{th}$ column in the data matrix $A_3$ is in a $1^{st}$ column of the matrix block $S_{1,1}$. For another example, a value in a $5^{th}$ row and a $6^{th}$ column in the index matrix $B_4$ indicates that an element in a $5^{th}$ row and a $6^{th}$ column in the data matrix $A_3$ is in a $2^{nd}$ column of the matrix block $S_{1,1}$.

In the foregoing two examples, before the non-zero elements and the zero elements are consecutively rearranged row-wise, if a row in the sparse matrix is all 0s, the row of all 0s may be deleted, to reduce the sizes of the generated data matrix and index matrix. Before the non-zero elements and the zero elements are consecutively rearranged column-wise, if a column in the sparse matrix is all 0s, the column of all 0s may be deleted, to reduce the sizes of the generated data matrix and index matrix.

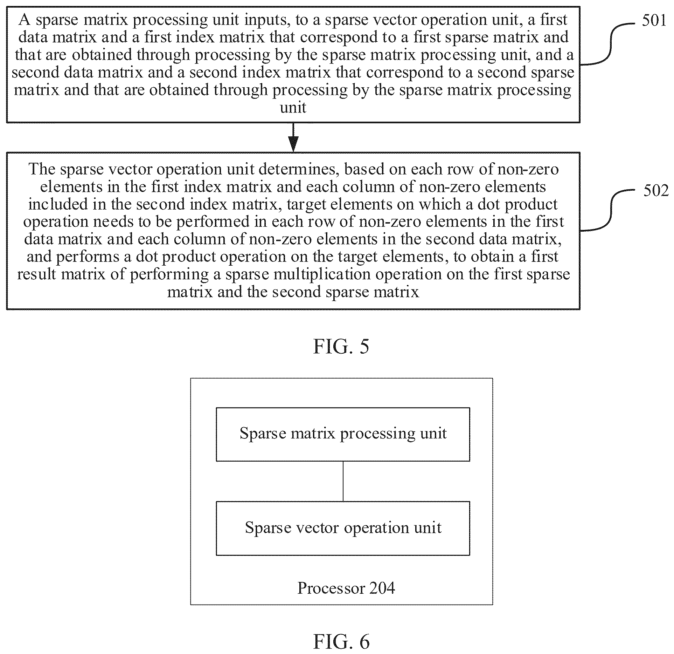

FIG. 5 is a schematic flowchart of a sparse matrix operation method according to an embodiment of this application. The method may be performed by the computing device 200 shown in FIG. 2, and may be specifically performed by the processor 204. As shown in FIG. 6, the processor 204 may include at least a sparse matrix processing unit and a sparse vector operation unit. The sparse matrix processing unit is a hardware part, for example, a processor core, that is in the processor 204 and that is configured to process sparse matrices on which a sparse multiplication operation is performed. In addition, the sparse matrix processing unit may alternatively be a software program that is run by the processor and that processes sparse matrices. The sparse vector operation unit (SPSVE) is a vector operation unit that is in the processor 204 and that is configured to perform an operation on a sparse vector in this application. In an example, the sparse vector operation unit may be a vector operation unit that is improved based on the vector operation unit and that is configured to perform a sparse vector multiplication operation provided in this application.

With reference to FIG. 5, the sparse matrix operation method provided in this embodiment of this application includes the following steps.

Step 501: The sparse matrix processing unit inputs, to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit.

In an example, an application related to sparse matrix multiplication may run in the computing device. For example, the application may be a high-performance computing (High-Performance Computing, HPC) application, an artificial intelligence (Artificial Intelligence, AI) application, a graph computing application, or the like. In a running process, when sparse matrix multiplication needs to be performed, the application may send a matrix multiplication operation request to the processor. In response to the matrix multiplication operation request, the processor reads, from the memory (for example, a hard disk drive), two sparse matrices on which a matrix multiplication operation is to be performed.

The two sparse matrices may be in, but not limited to, formats such as CSC (Compressed Sparse Column Format, compressed sparse column format), CSR (Compressed Sparse Row Format, compressed sparse row format), and COO (Coordinate Format, coordinate format). If formats of the two obtained sparse matrices are not the sparse compressed tile matrix shown in FIG. 3 or FIG. 4, the two sparse matrices may be converted into sparse compressed tile matrices used in embodiments of this application. For a specific conversion manner, refer to content in FIG. 3 or FIG. 4. Details are not described herein again.

Each row of elements in the first data matrix corresponding to the first sparse matrix is obtained by separately arranging zero elements and non-zero elements in each row of elements in the first sparse matrix consecutively, and a non-zero element in the first index matrix is a column number, in the first sparse matrix, of a non-zero element at a same position in the first data matrix. Each column of elements in the second data matrix corresponding to the second sparse matrix is obtained by separately arranging zero elements and non-zero elements in each column of elements in the second sparse matrix consecutively, and a non-zero element in the second index matrix is a row number, in the second sparse matrix, of a non-zero element at a same position in the second data matrix.

After obtaining the first data matrix, the first index matrix, the second data matrix, and the second index matrix, the sparse matrix processing unit may sequentially input each row of elements included in the first data matrix and the first index matrix and each column of elements included in the second data matrix and the second index matrix to the sparse vector operation unit, to complete a sparse multiplication operation on the first sparse matrix and the second sparse matrix. In an example, an $m^{th}$ row of elements in the first data matrix, an $m^{th}$ row of elements in the first index matrix, an $n^{th}$ column of elements in the second data matrix, and an $n^{th}$ column of elements in the second index matrix may be input into the sparse vector operation unit, and the sparse vector operation unit outputs an element in an $m^{th}$ row and an $n^{th}$ column in a first result matrix corresponding to the first sparse matrix and the second sparse matrix.

According to the sparse matrix operation method provided in this application, a person skilled in the art may write a corresponding processing program as a processing function for sparse matrix multiplication, and then add the processing function to a mathematics library. The mathematics library may be stored in the computing device that executes the application, and includes a large quantity of processing functions. The processing functions may be used to implement various mathematical computations in the application. When the application needs to perform sparse matrix multiplication, an execution request for sparse matrix multiplication may be sent to the processor. Then, the processor may invoke the processing function for sparse matrix multiplication, to implement processing included and implicitly included in step 501 and step 502.

Step 502: The sparse vector operation unit determines, based on each row of non-zero elements in the first index matrix and each column of non-zero elements included in the second index matrix, target elements on which a dot product operation needs to be performed in each row of non-zero elements in the first data matrix and each column of non-zero elements in the second data matrix, and performs a dot product operation on the target elements, to obtain the first result matrix of performing a sparse multiplication operation on the first sparse matrix and the second sparse matrix.

A multiplication operation performed on any two matrices may be represented as performing a vector dot product operation on an $m^{th}$ row of elements in a first matrix and an $n^{th}$ column of elements in a second matrix, to obtain an element in an $m^{th}$ row and an $n^{th}$ column in a result matrix corresponding to the multiplication operation performed on the two matrices. In this embodiment of this application, a non-zero element in the first index matrix is a column number, in the first sparse matrix, of a non-zero element at a same position in the first data matrix, and a non-zero element in the second index matrix is a row number, in the second sparse matrix, of a non-zero element at a same position in the second data matrix. If non-zero elements with a same value exist in a row of elements in the first index matrix and a column of elements in the second index matrix, it indicates that when a vector dot product operation is performed on the row of elements in the corresponding first sparse matrix and the column of elements in the corresponding second sparse matrix, a dot product operation on non-zero elements at corresponding positions exists. A position of a non-zero element at a corresponding position in the row of the first data matrix is the same as a position of the non-zero element with the same value in the row of the first index matrix, and a position of a non-zero element at a corresponding position in the row of the second data matrix is the same as a position of the non-zero element with the same value in the row of the second index matrix.

As shown in FIG. 3, if the two matrices, that is, the first sparse matrix and the second sparse matrix, on which the sparse multiplication operation is performed are both a sparse matrix S, a data matrix $A_1$ is the first data matrix, an index matrix $A_2$ is the first index matrix, a data matrix $B_1$ is the second data matrix, and an index matrix $B_2$ is the second index matrix. A vector dot product operation on a $1^{st}$ row of elements "11100000" in the first sparse matrix and a $2^{nd}$ column of elements "10010000" in the second sparse matrix is used as an example. A $1^{st}$ row of elements in the first index matrix is "12300000", and a $1^{st}$ column of elements in the second index matrix is "13000000". It can be learned that a $1^{st}$ non-zero element in the $1^{st}$ row of elements in the first index matrix is the same as a $1^{st}$ non-zero element in the $2^{nd}$ column of elements in the second index matrix, and a $3^{rd}$ non-zero element in the $1^{st}$ row of elements in the first index matrix is the same as a $2^{nd}$ non-zero element in the $2^{nd}$ column of elements in the second index matrix. Therefore, a dot product operation may be performed on a $1^{st}$ element and a $3^{rd}$ element in a $1^{st}$ row of elements "11100000" in the first data matrix and a $1^{st}$ element and a $2^{nd}$ element in a $2^{nd}$ column of elements "11000000" in the second data matrix, to obtain a dot product operation result "2", that is, obtain a vector dot product operation result of the $1^{st}$ row of elements in the first sparse matrix and the $2^{nd}$ column of elements in the second sparse matrix.

In an example, processing performed by the sparse vector operation unit in step 502 may be referred to as a sparse vector multiplication operation, and the processor may execute an SPSVE instruction to instruct the sparse vector operation unit to implement processing in step 502. Therefore, an operation on an $m^{th}$ row of the first sparse matrix and an $n^{th}$ column of the second sparse matrix is converted by the sparse vector operation unit into: The sparse vector operation unit determines a first position in the $m^{th}$ row of the first index matrix and a second position in the $n^{th}$ column of the second index matrix that are of a same non-zero element included in the $m^{th}$ row and the $n^{th}$ column. The sparse vector operation unit performs a dot product operation on a target element at the first position in the $m^{th}$ row of the first data matrix and a target element at the second position in the $n^{th}$ column of the second data matrix, to obtain the element in the $m^{th}$ row and the $n^{th}$ column in the first result matrix. After obtaining an element corresponding to each row or each column of the first result matrix, the processor may return the obtained first result matrix to the corresponding application.

It can be learned that in this embodiment of this application, the sparse vector operation unit may determine, based on the first index matrix and the second index matrix, non-zero elements that are in the first data matrix and the second data matrix and on which a dot product operation needs to be performed, and perform a dot product operation on the corresponding non-zero elements, to obtain the first result matrix of performing the sparse multiplication operation on the first sparse matrix and the second sparse matrix. Because the first sparse matrix and the second sparse matrix include only a small quantity of non-zero elements, an operation on a large quantity of zero elements can be avoided, and efficiency of performing the sparse multiplication operation by the processor can be improved.

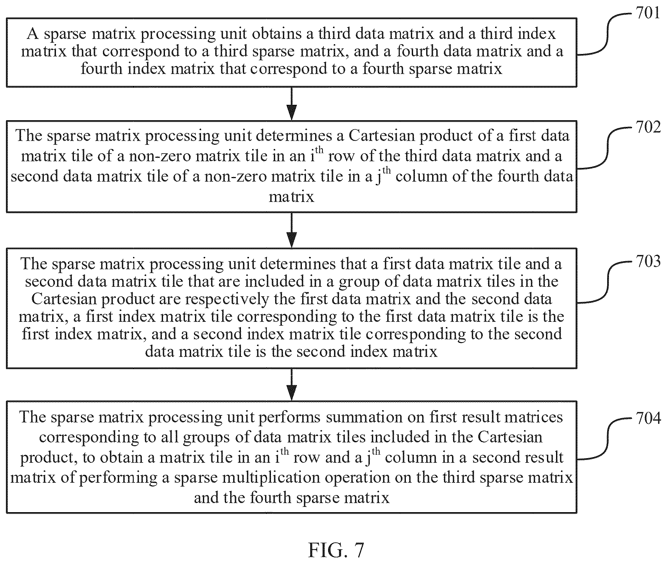

FIG. 7 is a schematic flowchart of another sparse matrix operation method according to an embodiment of this application. Similarly, the method may be performed by the computing device 200 shown in FIG. 2, and may be specifically performed by the processor 204 shown in FIG. 6. With reference to FIG. 7, the another sparse matrix operation method provided in this embodiment of this application includes the following steps.

Step 701: The sparse matrix processing unit obtains a third data matrix and a third index matrix that correspond to a third sparse matrix, and a fourth data matrix and a fourth index matrix that correspond to a fourth sparse matrix.

Processing of obtaining the third sparse matrix and the fourth sparse matrix in step 701 is similar to processing of obtaining the first sparse matrix and the second sparse matrix in step 701. Details are not described herein again. In content of the embodiment corresponding to FIG. 7, the first sparse matrix may be a matrix tile in the third sparse matrix, and the second sparse matrix may be a matrix tile in the fourth sparse matrix.

Each row of elements in the third data matrix corresponding to the third sparse matrix is obtained by separately arranging zero elements and non-zero elements in each row of elements in the third sparse matrix consecutively, and a non-zero element in the third index matrix is a column number, in the third sparse matrix, of a non-zero element at a same position in the third data matrix. Each column of elements in the fourth data matrix corresponding to the fourth sparse matrix is obtained by separately arranging zero elements and non-zero elements in each column of elements in the fourth sparse matrix consecutively, and a non-zero element in the fourth index matrix is a row number, in the fourth sparse matrix, of a non-zero element at a same position in the fourth data matrix.

After the third sparse matrix and the fourth sparse matrix are obtained, tiling may be performed on the third data matrix, the third index matrix, the fourth data matrix, and the fourth index matrix based on a same size, to obtain a plurality of first data matrix tiles corresponding to the third data matrix, a plurality of first index matrix tiles corresponding to the third index matrix, a plurality of second data matrix tiles corresponding to the fourth data matrix, and a plurality of second index matrix tiles corresponding to the fourth index matrix. The first data matrix tile, the first index matrix tile, the second data matrix tile, and the second index matrix tile are tile matrices.

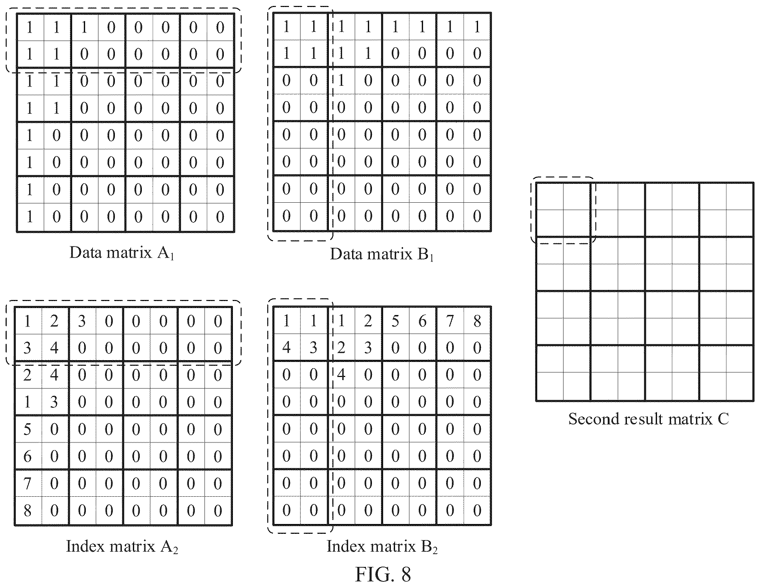

For example, as shown in FIG. 3, a data matrix $A_1$ may be the third data matrix, an index matrix $A_2$ may be the third index matrix, a data matrix $B_1$ may be the fourth data matrix, and an index matrix $B_2$ may be the fourth index matrix. Correspondingly, a data matrix $A_1$, an index matrix $A_2$, a data matrix $B_1$, and an index matrix $B_2$ shown in FIG. 8 may be diagrams obtained by performing tiling on the data matrix $A_1$, the index matrix $A_2$, the data matrix $B_1$, and the index matrix $B_2$ shown in FIG. 3 based on a size of $2 \times 2$. A second data matrix C shown in FIG. 8 is a second result matrix corresponding to a sparse multiplication operation performed on the third sparse matrix and the fourth sparse matrix.

In an example, there are a large quantity of zero matrix tiles in the first data matrix tiles, the first index matrix tiles, the second data matrix tiles, and the second index matrix tiles. Therefore, when the first data matrix tiles, the first index matrix tiles, the second data matrix tiles, and the second index matrix tiles corresponding to the third sparse matrix and the fourth sparse matrix are stored, only non-zero matrix tiles in the first data matrix tiles, the first index matrix tiles, the second data matrix tiles, and the second index matrix tiles may be stored. In this way, storage space occupied for storing the third sparse matrix and the fourth sparse matrix can be reduced.

Step 702: The sparse matrix processing unit determines a Cartesian product of a first data matrix tile of a non-zero matrix tile in an $i^{th}$ row of the third data matrix and a second data matrix tile of a non-zero matrix tile in a $j^{th}$ column of the fourth data matrix.

The Cartesian product of the first data matrix tile of the non-zero matrix tile and the second data matrix tile of the non-zero matrix tile means that a first data matrix tile of each non-zero matrix tile is paired with a second data matrix tile of each non-zero matrix tile to obtain a plurality of groups of data matrix tiles, and each group of data matrix tiles includes one first data matrix tile and one second data matrix tile.

As shown in FIG. 8, first data matrix tiles of non-zero matrix tiles in a $1^{st}$ row of the data matrix $A_1$ include

A00_data $\begin{bmatrix} 1 & 1 \\ 1 & 1 \end{bmatrix}$ and A01_data $\begin{bmatrix} 1 & 0 \\ 0 & 0 \end{bmatrix}$, and a

second data matrix tile of a non-zero matrix tile in a $1^{st}$ column of the data matrix $B_1$ includes B01_data

$\begin{bmatrix} 1 & 1 \\ 1 & 1 \end{bmatrix}$. Correspondingly, a Cartesian product of the first data matrix tiles of the non-zero matrix tiles in the $1^{st}$ row of the data matrix $A_1$ and the second data matrix tile of the non-zero matrix tile in the $1^{st}$ column of the data matrix $B_1$ includes (A00_data, B01_data) and (A01_data, B01_data).

A matrix obtained by performing the sparse multiplication operation on the third sparse matrix and the fourth sparse matrix may be referred to as the second result matrix. The Cartesian product of the first data matrix tile of the non-zero matrix tile in the $i^{th}$ row of the third data matrix and the second data matrix tile of the non-zero matrix tile in the $j^{th}$ column of the fourth data matrix is determined. A matrix tile in an $i^{th}$ row and a $j^{th}$ column included in the second result matrix is equal to a matrix tile obtained by performing matrix multiplication on each pair of data matrix tiles included in the determined Cartesian product, and then performing summation on result matrices obtained by performing matrix multiplication on all pairs of data matrix tiles.

Step 703: The sparse matrix processing unit determines that a first data matrix tile and a second data matrix tile that are included in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

In an example, the first data matrix and the first index matrix that correspond to the first sparse matrix and that are obtained by the sparse matrix processing unit in step 501 and the second data matrix and the second index matrix that correspond to the second sparse matrix and that are obtained by the sparse matrix processing unit in step 501 may be one of a plurality of groups of data matrix tiles included in the Cartesian product in step 703. To be specific, a first data matrix tile included in a group of data matrix tiles in the Cartesian product may be used as the first data matrix in step 501, a second data matrix tile included in the group of data matrix tiles may be used as the second data matrix in step 501, a first index matrix tile corresponding to the first data matrix tile may be used as the first index matrix in step 501, and a second index matrix tile corresponding to the second data matrix tile may be used as the second index matrix in step 501.

For a matrix multiplication operation corresponding to each group of data matrix tiles in the Cartesian product, the sparse matrix operation method shown in step 501 and step 502 may be used, to obtain a first result matrix corresponding to each group of data matrix tiles.

For example, in FIG. 8, a first data matrix tile corresponding to A00_data is A00_index $\begin{bmatrix} 1 & 2 \\ 3 & 4 \end{bmatrix}$, and

a second data matrix tile corresponding to B01_data is

B01_index $\begin{bmatrix} 1 & 1 \\ 4 & 3 \end{bmatrix}$. Therefore, a corresponding matrix multiplication operation on A00_data and B01_data includes: A $1^{st}$ row of elements [1, 2] corresponding to A00_index, a $1^{st}$ column of elements [1, 4] corresponding to B01_index, a $1^{st}$ row of elements [1, 1] corresponding to A00_data, and a $1^{st}$ column of elements [1, 1] corresponding to B01_data are separately input into the sparse vector operation unit. The sparse vector operation unit determines that both $1^{st}$ elements in the $1^{st}$ row of elements of A00_index and the $1^{st}$ column of elements of B01_index are "1". The sparse vector operation unit may multiply $1^{st}$ elements respectively corresponding to the $1^{st}$ row of elements of A00_data and the $1^{st}$ column of elements of B01_data, to obtain an element in a $1^{st}$ row and a $1^{st}$ column in a result matrix of the matrix multiplication operation of A00_data and B01_data. With reference to the foregoing example, an element in the $1^{st}$ row and a $2^{nd}$ column, an element in a $2^{nd}$ row and the $1^{st}$ column, and an element in the $2^{nd}$ row and the $2^{nd}$ column in the result matrix of the matrix multiplication operation of A00_data and B01_data may be computed in sequence.

Step 704: The sparse matrix processing unit performs summation on first result matrices corresponding to all groups of data matrix tiles included in the Cartesian product, to obtain the matrix tile in the $i^{th}$ row and the $j^{th}$ column in the second result matrix of performing the sparse multiplication operation on the third sparse matrix and the fourth sparse matrix.

After obtaining the first result matrix corresponding to each group of data matrix tiles in the Cartesian product of the first data matrix tile of the non-zero matrix tile in the $i^{th}$ row of the third data matrix and the second data matrix tile of the non-zero matrix tile in the $j^{th}$ column of the fourth data matrix, the sparse matrix processing unit may perform summation on the first result matrices corresponding to all the groups of data matrix tiles. In this way, the matrix tile in the $i^{th}$ row and the $j^{th}$ column in the second result matrix of performing the sparse multiplication operation on the third sparse matrix and the fourth sparse matrix is obtained.

In this way, in a process of performing the sparse multiplication operation corresponding to the third sparse matrix and the fourth sparse matrix, in an aspect, a zero matrix tile included in the first data matrix tile and the second data matrix tile may be screened out by using the Cartesian product, to avoid the zero matrix tile from participating in the operation process. In another aspect, an operation may be performed on each group of data matrix tiles in the Cartesian product by using the sparse vector multiplication operation provided in this application, so that an operation on a large quantity of zero elements can be avoided, and efficiency of performing the sparse multiplication operation by the processor can be further improved.

In embodiments of this application, when the third data matrix, the third index matrix, the fourth data matrix, and the fourth index matrix are generated based on the third sparse matrix and the fourth sparse matrix obtained in step 701 and according to the conversion method shown in FIG. 4, the third data matrix includes L×M first data matrix blocks, each first data matrix block includes at least one first data matrix tile, and the third index matrix includes L×M third index matrix blocks, each first index matrix block includes at least one first index matrix tile. The fourth data matrix includes M×N second data matrix blocks, each second data matrix block includes at least one second data matrix tile, the fourth index matrix includes M×N second index matrix blocks, and each second index matrix block includes at least one second index matrix tile. Values of L, M, and N may be equal or may not be equal.

In a possible implementation, the sparse matrix processing unit may record a first position of a zero matrix block of the L×M first data matrix blocks in the third data matrix, a second position of a non-zero matrix block of the L×M first data matrix blocks in the third data matrix, a third position of a zero matrix block of the M×N second data matrix blocks in the fourth data matrix, and a fourth position of a non-zero matrix block of the M×N second data matrix blocks in the fourth data matrix. Before step 701 is performed, position correspondence determining may be performed based on the first position and the third position that correspond to zero matrix blocks and the second position and the fourth position that correspond to non-zero matrix blocks, a quantity of non-zero matrix blocks in the L×N matrix blocks included in the second result matrix may be further determined, and then storage space is applied for the second result matrix based on the quantity.

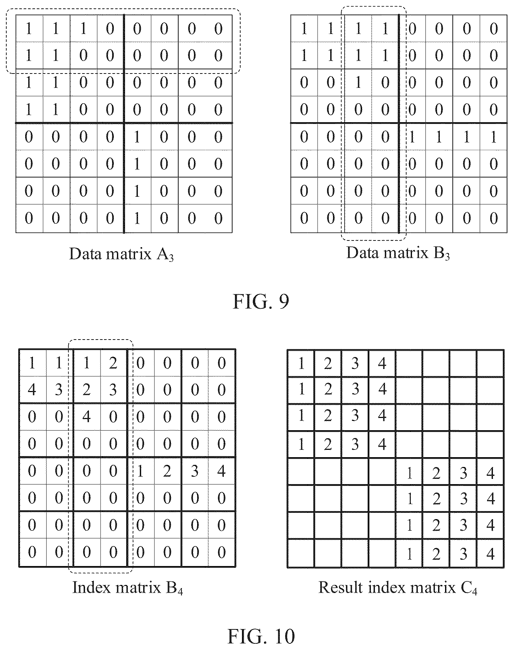

As shown in FIG. 9, the first data matrix may be a data matrix $A_3$, and the second data matrix may be a data matrix $B_4$. Non-zero matrix blocks corresponding to the data matrix $A_3$ are in a $1^{st}$ row and a $1^{st}$ column of the data matrix $A_3$ and in a $2^{nd}$ row and the $1^{st}$ column of the data matrix $A_3$, and zero matrix blocks corresponding to the data matrix $A_3$ are in the $1^{st}$ row and the $2^{nd}$ column of the data matrix $A_3$ and in the $2^{nd}$ row and the $1^{st}$ column of the data matrix $A_3$. Non-zero matrix blocks corresponding to the data matrix $B_3$ are in a $1^{st}$ row and a $1^{st}$ column of the data matrix $B_3$ and in a $2^{nd}$ row and the $1^{st}$ column of the data matrix $B_3$, and zero matrix blocks corresponding to the data matrix $B_3$ are in the $1^{st}$ row and the $2^{nd}$ column of the data matrix $B_3$ and in the $2^{nd}$ row and the $1^{st}$ column of the data matrix $B_3$. In an example, a first position, a second position, a third position, and a fourth position corresponding to the first data matrix and a first position, a second position, a third position, and a fourth position corresponding to the second data matrix may be recorded by using corresponding matrices. To be specific, positions (a first position, a second position, a third position, and a fourth position) corresponding to the data matrix $A_3$ and positions (a first position, a second position, a third position, and a fourth position) corresponding to the data matrix $B_3$ may be both denoted as $\begin{bmatrix} 1 & 0 \\ 0 & 1 \end{bmatrix}$.

For example, if both a matrix block in a 1st row and a 1st column of the first data matrix and a matrix block in a 1st row and a 1st column of the second data matrix are non-zero matrix blocks, a matrix block in a 1st row and a 1st column of the second result matrix is a non-zero matrix block; and if both a matrix block in a 2nd row and a 2nd column of the first data matrix and a matrix block at a 2nd row and a 2nd column of the second data matrix are non-zero matrix blocks, a matrix block in a 2nd row and a 2nd column of the second result matrix is a non-zero matrix block. After position correspondence determining, it may be determined that the second result matrix includes two non-zero matrix blocks, and then only storage space corresponding to the two non-zero matrix blocks may be applied for in a memory.

It can be learned that, in embodiments of this application, storage space for a result matrix is applied for in the memory based on a position correspondence determining result of matrix tiles included in the data matrices. In this way, in an aspect, storage space of the result matrix in the memory can be reduced, and in another aspect, compared with a conventional technology, efficiency of position correspondence determining can also be improved.

In embodiments of this application, when the third data matrix, the third index matrix, the fourth data matrix, and the fourth index matrix are generated based on the third sparse matrix and the fourth sparse matrix obtained in step 701 and according to the conversion method shown in FIG. 4, processing in step 702 may include:

If determining that an nth first data matrix tile group in the ith row and an nth second data matrix tile group in the jth column satisfy an operation condition, the sparse matrix processing unit determines a Cartesian product of a first data matrix tile of each non-zero matrix tile and a second data matrix tile of each non-zero matrix tile that are included in the nth first data matrix tile group and the nth second data matrix tile group. The first data matrix tile group includes a first data matrix tile that is in a same first data matrix block and that is in the ith row, the second data matrix tile group includes a second data matrix tile that is in a same second data matrix block and that is in the jth column, and the operation condition is that both the first data matrix tile group and the second data matrix tile group include non-zero matrix tiles.

After the third sparse matrix and the fourth sparse matrix are partitioned, when determining the Cartesian product of the first data matrix tile of the non-zero matrix tile in the ith row of the third data matrix and the second data matrix tile of the non-zero matrix tile in the jth column of the fourth data matrix, the sparse matrix processing unit may separately determine, based on each data matrix block, a Cartesian product of a non-zero matrix tile that is in each first data matrix block and that is in the ith row of the third data matrix and a non-zero matrix tile that is in a second data matrix block at a corresponding position and that is in the jth column of the fourth data matrix.

For example, a Cartesian product corresponding to a non-zero matrix tile that is in a 1st first data matrix block and that is in the ith row of the third data matrix and a non-zero matrix tile that is in a 1st second data matrix block and that is in the jth row of the fourth data matrix is determined. A Cartesian product corresponding to a non-zero matrix tile that is in a 2nd second data matrix block and that is in the ith row of the third data matrix and a non-zero matrix tile that is in a 2nd second data matrix block and that is in the jth row of the fourth data matrix is determined. A Cartesian product corresponding to a non-zero matrix tile that is in a kth first data matrix block and that is in the ith row of the third data matrix and a non-zero matrix tile that is in a kth second data matrix block and that is in the jth row of the fourth data matrix is determined. Then, summation is performed on first result matrices corresponding to all groups of data matrix tiles included in k Cartesian products, to obtain the matrix tile in the ith row and the jth column in the second result matrix of performing the sparse multiplication operation on the third sparse matrix and the fourth sparse matrix. k is a quantity of data matrix blocks corresponding to each row of the third data matrix or each column of the fourth data matrix.

Because a data matrix tile in a data matrix block may be a zero matrix tile, before the Cartesian product is determined, position correspondence determining may be performed on a data matrix tile group included in each data matrix block, where the data matrix tile group refers to a data matrix tile that is in a same data matrix block and that is in a row or a column of a data matrix. If all matrix tiles in one of a first data matrix tile group in the first data matrix and a second data matrix tile group in the second data matrix that are at corresponding positions are zero matrix tiles, a Cartesian product of the first data matrix tile group and the second data matrix tile group may not be determined. If non-zero matrix tiles exist in both a first data matrix tile group in the first data matrix and a second data matrix tile group in the second data matrix that are at corresponding positions, a Cartesian product of the first data matrix tile group and the second data matrix tile group may be determined.

As shown in FIG. 9, both a 1st first data matrix tile group in the 1st row of the data matrix $A_3$ and a 1st second data matrix tile group in the 1st column of the data matrix $A_4$ include non-zero matrix tiles, and both a 2nd first data matrix tile group in the 1st row of the data matrix $A_3$ and a 2nd second data matrix tile group in the 1st column of the data matrix $A_4$ are zero matrix tiles. In this case, a Cartesian product corresponding to a first data matrix tile in the $1^{st}$ row of the data matrix $A_3$ and a second data matrix tile in the $2^{nd}$ row of the data matrix $A_4$ may be determined only based on non-zero matrix tiles included in the $1^{st}$ first data matrix tile group in the $1^{st}$ row of the data matrix $A_3$ and the $1^{st}$ second data matrix tile group in the $1^{st}$ column of the data matrix $A_4$. In this way, a process in which a zero matrix tile participates in a sparse multiplication operation can be reduced by performing position correspondence determining on data matrix tile groups, thereby improving execution efficiency of the sparse multiplication operation.

In an example, the result matrix (the first result matrix or the second result matrix) may further have a corresponding result index matrix, where each non-zero element in the result index matrix indicates a column in which each non-zero element in the result matrix is located.

For the result index matrix, a value of an element corresponding to each column is a column number corresponding to each column in an index matrix (the second index matrix or the fourth index matrix) corresponding to a data matrix in which non-zero elements are compressed in a column direction. As shown in FIG. 10, the fourth index matrix is an index matrix $B_4$, and the result index matrix is a result index matrix $C_4$. It can be learned from FIG. 10 that values corresponding to the first four columns of elements in the result index matrix $C_4$ are column numbers, in a corresponding second index matrix tile, corresponding to the first four columns of elements in the index matrix $B_4$, and values corresponding to the last four columns of elements in the index matrix $C_4$ are column numbers, in a corresponding second index matrix tile, corresponding to the last four columns of elements in the index matrix $B_4$. Column numbers in FIG. 10 are arranged starting from "1", in other words, column numbers corresponding to elements in a $1^{st}$ column are "1". Optionally, the column numbers may alternatively be arranged starting from another value, for example, "0".

In an example, it can be learned from content of the embodiments corresponding to FIG. 3 and FIG. 4 that, when a sparse matrix is converted into a data matrix, before non-zero elements and zero elements are rearranged column-wise, if a column in the sparse matrix is all 0s, the column of all 0s may be deleted. In this case, when a column number is set for each column of a data matrix tile and an index matrix tile, the deleted column of all 0s may be skipped. For example, if a $2^{nd}$ column deleted from a sparse matrix corresponding to the index matrix $B_4$ is an all-0 column, column numbers corresponding to the first four columns of the index matrix $B_4$ in FIG. 10 are respectively 1, 3, 4, and 5.

Any combination of all the foregoing optional technical solutions can form an optional embodiment of this application. Details are described in embodiments of this application.

An embodiment of this application further provides a processor. The processor includes a sparse matrix processing unit and a sparse vector operation unit. As shown in FIG. 6, that the processor provided in this embodiment of this application performs the sparse matrix operation method provided in this application includes:

The sparse matrix processing unit is configured to input, to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit, where each non-zero element in the first index matrix indicates a column number corresponding to a non-zero element at a same position in the first data matrix, and each non-zero element in the second index matrix indicates a row number corresponding to a non-zero element at a same position in the second data matrix.

The sparse vector operation unit is configured to: determine, based on each row of elements included in the first index matrix and each row of elements included in the second index matrix, target elements on which a dot product operation needs to be performed in each row of elements in the first data matrix and each row of elements in the second data matrix, and perform a dot product operation on the target elements, to obtain a first result matrix of performing a sparse multiplication operation on the first sparse matrix and the second sparse matrix.

In an implementation, the sparse vector operation unit is configured to determine a first position in an $m^{th}$ row of the first index matrix and a second position in an $n^{th}$ row of the second index matrix that are of a same element included in the $m^{th}$ row and the $n^{th}$ row.

The sparse vector operation unit is configured to perform a dot product operation on a target element at the first position in an $m^{th}$ row of the first data matrix and a target element at the second position in an $n^{th}$ row of the second data matrix, to obtain an element in an $m^{th}$ row and an $n^{th}$ column in the first result matrix.

In an implementation, the sparse matrix processing unit is configured to obtain a third data matrix and a third index matrix that correspond to a third sparse matrix, and a fourth data matrix and a fourth index matrix that correspond to a fourth sparse matrix, where the third data matrix includes a plurality of first data matrix tiles, the third index matrix includes a first index matrix tile corresponding to each first data matrix tile, the fourth data matrix includes a plurality of second data matrix tiles, and the fourth index matrix includes a plurality of second index matrix tiles corresponding to each second data matrix tile.

The sparse matrix processing unit is configured to determine a Cartesian product of a first data matrix tile of a non-zero matrix tile in an $i^{th}$ row of the third data matrix and a second data matrix tile of a non-zero matrix tile in a $j^{th}$ column of the fourth data matrix.

The sparse matrix processing unit is further configured to determine that a first data matrix tile and a second data matrix tile that are included in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

The sparse matrix processing unit is further configured to perform summation on first result matrices corresponding to all groups of data matrix tiles included in the Cartesian product, to obtain a matrix tile in an $i^{th}$ row and a $j^{th}$ column in a second result matrix of performing a sparse multiplication operation on the third sparse matrix and the fourth sparse matrix.

In an implementation, the third data matrix includes $L \times M$ first data matrix blocks, each first data matrix block includes at least one first data matrix tile, the third index matrix includes $L \times M$ third index matrix blocks, and each first index matrix block includes at least one first index matrix tile.

The fourth data matrix includes $M \times N$ second data matrix blocks, each second data matrix block includes at least one second data matrix tile, the fourth index matrix includes $M \times N$ second index matrix blocks, and each second index matrix block includes at least one second index matrix tile.

In an implementation, the sparse matrix processing unit is configured to determine, based on a first position of a zero matrix block of the $L \times M$ first data matrix blocks in the third data matrix, a second position of a non-zero matrix block of the $L \times M$ first data matrix blocks in the third data matrix, a third position of a zero matrix block of the $M \times N$ second data matrix blocks in the fourth data matrix, and a fourth position of a non-zero matrix block of the $M \times N$ second data matrix blocks in the fourth data matrix, a quantity of non-zero matrix blocks in $L \times N$ matrix blocks included in the second result matrix.

The sparse matrix processing unit is configured to apply, based on the quantity of non-zero matrix blocks, for storage space in a memory for the second result matrix.

In an implementation, that the sparse matrix processing unit is configured to determine the Cartesian product of the first data matrix tile of the non-zero matrix tile in the $i^{th}$ row of the third data matrix and the second data matrix tile of the non-zero matrix tile in the $j^{th}$ column of the fourth data matrix includes:

The sparse matrix processing unit is configured to: if determining that a $k^{th}$ first data matrix tile group in the $i^{th}$ row and a $k^{th}$ second data matrix tile group in the $j^{th}$ column satisfy an operation condition, determine a Cartesian product of a first data matrix tile of each non-zero matrix tile and a second data matrix tile of each non-zero matrix tile that are included in the $k^{th}$ first data matrix tile group and the $k^{th}$ second data matrix tile group.

The first data matrix tile group includes a first data matrix tile that is in a same first data matrix block and that is in the $i^{th}$ row, the second data matrix tile group includes a second data matrix tile that is in a same second data matrix block and that is in the $j^{th}$ column, and the operation condition is that both the first data matrix tile group and the second data matrix tile group include non-zero matrix tiles.

The processor provided in this embodiment of this application may be configured to perform the sparse matrix operation method provided in embodiments of this application. For a specific execution process, refer to the description content of the sparse matrix operation method in the foregoing embodiments. Details are not described herein again. The processor provided in this embodiment of this application is used to perform a sparse multiplication operation. The processor may determine, based on row numbers and column numbers separately indicated by each row of non-zero elements in the first index matrix and each column of non-zero elements in the second index matrix, the target elements on which a dot product operation needs to be performed in the first data matrix and the second data matrix, and perform a dot product operation on the target elements, to obtain the first result matrix of performing the sparse multiplication operation on the first sparse matrix and the second sparse matrix. In this way, an operation on a large quantity of zero elements in a sparse multiplication operation process can be avoided, and efficiency of performing the sparse multiplication operation by the processor can be improved.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the sparse matrix operation method provided in embodiments of this application.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the sparse matrix operation method in embodiments of this application.

In this application, terms such as "first" and "second" are used to distinguish between same items or similar items that have basically same purposes and functions. It should be understood that there is no logical or timing dependency between "first" and "second", and a quantity and an execution order are not limited. It should be further understood that although the following descriptions use the terms such as "first" and "second" to describe various elements, these elements should not be limited by the terms. These terms are merely used to distinguish one element from another. For example, without departing from the scope of the various examples, the first data matrix may be referred to as a second data matrix, and similarly, the second data matrix may be referred to as a first data matrix. Both the first data matrix and the second data matrix may be collectively referred to as data matrices, and in some cases, may be separate and different data matrices.

The term "at least one" in this application means one or more, and the term "a plurality of" in this application means two or more.

The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A sparse matrix operation method, wherein the method is performed by a processor, the processor comprises a sparse matrix processing unit and a sparse vector operation unit, and the method comprises:

   inputting, by the sparse matrix processing unit to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit, wherein each non-zero element in the first index matrix indicates a column number corresponding to a non-zero element at a same position in the first data matrix, and each non-zero element in the second index matrix indicates a row number corresponding to a non-zero element at a same position in the second data matrix; and
   determining, by the sparse vector operation unit based on each row of non-zero elements in the first index matrix and each column of non-zero elements comprised in the second index matrix, target elements on which a dot product operation needs to be performed in each row of non-zero elements in the first data matrix and each column of non-zero elements in the second data matrix, and performing a dot product operation on the target elements, to obtain a first result matrix of performing a sparse multiplication operation on the first sparse matrix and the second sparse matrix.

2. The method according to claim 1, wherein determining, by the sparse vector operation unit based on each row of non-zero elements in the first index matrix and each column of non-zero elements comprised in the second index matrix, the target elements on which a dot product operation needs to be performed in each row of non-zero elements in the first data matrix and each column of non-zero elements in the second data matrix, and performing the dot product operation on the target elements, to obtain the first result matrix of performing the sparse multiplication operation on the first sparse matrix and the second sparse matrix comprises:

   determining, by the sparse vector operation unit, a first position in an $m^{th}$ row of the first index matrix and a second position in an $n^{th}$ column of the second index matrix that are of a same non-zero element comprised in the $m^{th}$ row and the $n^{th}$ column; and
   performing, by the sparse vector operation unit, a dot product operation on a target element at the first position in an $m^{th}$ row of the first data matrix and a target element at the second position in an $n^{th}$ column of the second data matrix, to obtain an element in an $m^{th}$ row and an $n^{th}$ column in the first result matrix.

3. The method according to claim 1 or 2, wherein the method further comprises: obtaining, by the sparse matrix processing unit, a third data matrix and a third index matrix that correspond to a third sparse matrix, and a fourth data matrix and a fourth index matrix that correspond to a fourth sparse matrix, wherein the third data matrix comprises a plurality of first data matrix tiles, the third index matrix comprises a first index matrix tile corresponding to each first data matrix tile, the fourth data matrix comprises a plurality of second data matrix tiles, and the fourth index matrix comprises a plurality of second index matrix tiles corresponding to each second data matrix tile; and

   determining, by the sparse matrix processing unit, a Cartesian product of a first data matrix tile of a non-zero matrix tile in an $i^{th}$ row of the third data matrix and a second data matrix tile of a non-zero matrix tile in a $j^{th}$ column of the fourth data matrix; and
   before inputting, by the sparse matrix processing unit to the sparse vector operation unit, the first data matrix and the first index matrix that correspond to the first sparse matrix and that are obtained through processing by the sparse matrix processing unit, and the second data matrix and the second index matrix that correspond to the second sparse matrix and that are obtained through processing by the sparse matrix processing unit, the method further comprises: determining, by the sparse matrix processing unit, that a first data matrix tile and a second data matrix tile that are comprised in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

4. The method according to claim 3, wherein the third data matrix comprises $L \times M$ first data matrix blocks, each first data matrix block comprises at least one first data matrix tile, the third index matrix comprises $L \times M$ third index matrix blocks, and each first index matrix block comprises at least one first index matrix tile; and
the fourth data matrix comprises $M \times N$ second data matrix blocks, each second data matrix block comprises at least one second data matrix tile, the fourth index matrix comprises $M \times N$ second index matrix blocks, and each second index matrix block comprises at least one second index matrix tile.

5. The method according to claim 4, wherein the method further comprises:

   determining, by the sparse matrix processing unit based on a first position of a zero matrix block of the $L \times M$ first data matrix blocks in the third data matrix, a second position of a non-zero matrix block of the $L \times M$ first data matrix blocks in the third data matrix, a third position of a zero matrix block of the $M \times N$ second data matrix blocks in the fourth data matrix, and a fourth position of a non-zero matrix block of the $M \times N$ second data matrix blocks in the fourth data matrix, a quantity of non-zero matrix blocks in $L \times N$ matrix blocks comprised in the second result matrix; and
   applying, by the sparse matrix processing unit based on the quantity of non-zero matrix blocks, for storage space in a memory for the second result matrix.

6. The method according to any one of claims 3 to 5, wherein determining, by the sparse matrix processing unit, the Cartesian product of the first data matrix tile of the non-zero matrix tile in the $i^{th}$ row of the third data matrix and the second data matrix tile of the non-zero matrix tile in the $j^{th}$ column of the fourth data matrix comprises:

   if determining that an $n^{th}$ first data matrix tile group in the $i^{th}$ row and an $n^{th}$ second data matrix tile group in the $j^{th}$ column satisfy an operation condition, determining, by the sparse matrix processing unit, a Cartesian product of a first data matrix tile of each non-zero matrix tile and a second data matrix tile of each non-zero matrix tile that are comprised in the $k^{th}$ first data matrix tile group and in the $k^{th}$ second data matrix tile group, wherein
   the first data matrix tile group comprises a first data matrix tile that is in a same first data matrix block and that is in the $i^{th}$ row, the second data matrix tile group comprises a second data matrix tile that is in a same second data matrix block and that is in the $j^{th}$ column, and the operation condition is that both the first data matrix tile group and the second data matrix tile group comprise non-zero matrix tiles.

7. A processor, wherein the processor comprises a sparse matrix processing unit and a sparse vector operation unit, wherein

   the sparse matrix processing unit is configured to input, to the sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit, wherein each non-zero element in the first index matrix indicates a column number corresponding to a non-zero element at a same position in the first data matrix, and each non-zero element in the second index matrix indicates a row number corresponding to a non-zero element at a same position in the second data matrix; and
   the sparse vector operation unit is configured to: determine, based on each row of non-zero elements in the first index matrix and each column of non-zero elements comprised in the second index matrix, target elements on which a dot product operation needs to be performed in each row of non-zero elements in the first data matrix and each column of non-zero elements in the second data matrix, and perform a dot product operation on the target elements, to obtain a first result matrix of performing a sparse multiplication operation on the first sparse matrix and the second sparse matrix.

**8.** The processor according to claim 7, wherein

the sparse vector operation unit is configured to determine a first position in an $m^{th}$ row of the first index matrix and a second position in an $n^{th}$ column of the second index matrix that are of a same non-zero element comprised in the $m^{th}$ row and the $n^{th}$ column; and
the sparse vector operation unit is configured to perform a dot product operation on a target element at the first position in an $m^{th}$ row of the first data matrix and a target element at the second position in an $n^{th}$ column of the second data matrix, to obtain an element in an $m^{th}$ row and an $n^{th}$ column in the first result matrix.

**9.** The processor according to claim 7 or 8, wherein

the sparse matrix processing unit is configured to obtain a third data matrix and a third index matrix that correspond to a third sparse matrix, and a fourth data matrix and a fourth index matrix that correspond to a fourth sparse matrix, wherein the third data matrix comprises a plurality of first data matrix tiles, the third index matrix comprises a first index matrix tile corresponding to each first data matrix tile, the fourth data matrix comprises a plurality of second data matrix tiles, and the fourth index matrix comprises a plurality of second index matrix tiles corresponding to each second data matrix tile;
the sparse matrix processing unit is configured to determine a Cartesian product of a first data matrix tile of a non-zero matrix tile in an $i^{th}$ row of the third data matrix and a second data matrix tile of a non-zero matrix tile in a $j^{th}$ column of the fourth data matrix; and
the sparse matrix processing unit is further configured to determine that a first data matrix tile and a second data matrix tile that are comprised in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix.

**10.** The processor according to claim 9, wherein

the third data matrix comprises $L \times M$ first data matrix blocks, each first data matrix block comprises at least one first data matrix tile, the third index matrix comprises $L \times M$ third index matrix blocks, and each first index matrix block comprises at least one first index matrix tile; and
the fourth data matrix comprises $M \times N$ second

data matrix blocks, each second data matrix block comprises at least one second data matrix tile, the fourth index matrix comprises $M \times N$ second index matrix blocks, and each second index matrix block comprises at least one second index matrix tile.

**11.** The processor according to claim 10, wherein

the sparse matrix processing unit is configured to determine, based on a first position of a zero matrix block of the $L \times M$ first data matrix blocks in the third data matrix, a second position of a non-zero matrix block of the $L \times M$ first data matrix blocks in the third data matrix, a third position of a zero matrix block of the $M \times N$ second data matrix blocks in the fourth data matrix, and a fourth position of a non-zero matrix block of the $M \times N$ second data matrix blocks in the fourth data matrix, a quantity of non-zero matrix blocks in $L \times N$ matrix blocks comprised in the second result matrix; and
the sparse matrix processing unit is configured to apply, based on the quantity of non-zero matrix blocks, for storage space in a memory for the second result matrix.

**12.** The processor according to any one of claims 9 to 11, wherein
that the sparse matrix processing unit is configured to determine the Cartesian product of the first data matrix tile of the non-zero matrix tile in the $i^{th}$ row of the third data matrix and the second data matrix tile of the non-zero matrix tile in the $j^{th}$ column of the fourth data matrix comprises:

the sparse matrix processing unit is configured to: if determining that an $n^{th}$ first data matrix tile group in the $i^{th}$ row and an $n^{th}$ second data matrix tile group in the $j^{th}$ column satisfy an operation condition, determine a Cartesian product of a first data matrix tile of each non-zero matrix tile and a second data matrix tile of each non-zero matrix tile that are comprised in the $k^{th}$ first data matrix tile group and the $k^{th}$ second data matrix tile group, wherein the first data matrix tile group comprises a first data matrix tile that is in a same first data matrix block and that is in the $i^{th}$ row, the second data matrix tile group comprises a second data matrix tile that is in a same second data matrix block and that is in the $j^{th}$ column, and the operation condition is that both the first data matrix tile group and the second data matrix tile group comprise non-zero matrix tiles.

**13.** A computing device, wherein the computing device comprises a memory and the processor according to any one of claims 7 to 12, the memory stores at least one instruction, and the processor executes the at least one instruction to perform the method according to any one of claims 1 to 6.

14. A computer-readable storage medium, wherein the computer-readable storage medium stores computer program code, and when the computer program code is executed by a computer device, the computer device is enabled to perform the method according to any one of claims 1 to 6.

15. A computer program product comprising instructions, wherein when the computer program product runs on a computing device, the computing device is enabled to perform the method according to any one of claims 1 to 6.

FIG. 1

FIG. 2

| | | | | | | | |
|---|---|---|---|---|---|---|---|
| 1 | 1 | 1 | 0 | 0 | 0 | 0 | 0 |
| 0 | 0 | 1 | 1 | 0 | 0 | 0 | 0 |
| 0 | 1 | 0 | 1 | 0 | 0 | 0 | 0 |
| 1 | 0 | 1 | 0 | 0 | 0 | 0 | 0 |
| 0 | 0 | 0 | 0 | 1 | 0 | 0 | 0 |
| 0 | 0 | 0 | 0 | 0 | 1 | 0 | 0 |
| 0 | 0 | 0 | 0 | 0 | 0 | 1 | 0 |
| 0 | 0 | 0 | 0 | 0 | 0 | 0 | 1 |

Sparse matrix S

| | | | | | | | |
|---|---|---|---|---|---|---|---|
| 1 | 1 | 1 | 0 | 0 | 0 | 0 | 0 |
| 1 | 1 | 0 | 0 | 0 | 0 | 0 | 0 |
| 1 | 1 | 0 | 0 | 0 | 0 | 0 | 0 |
| 1 | 1 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |

Data matrix $A_1$

| | | | | | | | |
|---|---|---|---|---|---|---|---|
| 1 | 2 | 3 | 0 | 0 | 0 | 0 | 0 |
| 3 | 4 | 0 | 0 | 0 | 0 | 0 | 0 |
| 2 | 4 | 0 | 0 | 0 | 0 | 0 | 0 |
| 1 | 3 | 0 | 0 | 0 | 0 | 0 | 0 |
| 5 | 0 | 0 | 0 | 0 | 0 | 0 | 0 |
| 6 | 0 | 0 | 0 | 0 | 0 | 0 | 0 |
| 7 | 0 | 0 | 0 | 0 | 0 | 0 | 0 |
| 8 | 0 | 0 | 0 | 0 | 0 | 0 | 0 |

Index matrix $A_2$

| | | | | | | | |
|---|---|---|---|---|---|---|---|
| 1 | 1 | 1 | 1 | 1 | 1 | 1 | 1 |
| 1 | 1 | 1 | 1 | 0 | 0 | 0 | 0 |
| 0 | 0 | 1 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Data matrix $B_1$

| | | | | | | | |
|---|---|---|---|---|---|---|---|
| 1 | 1 | 1 | 2 | 5 | 6 | 7 | 8 |
| 4 | 3 | 2 | 3 | 0 | 0 | 0 | 0 |
| 0 | 0 | 4 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Index matrix $B_2$

FIG. 3

Matrix block $S_{0,0}$ / Matrix block $S_{0,1}$

Matrix block $S_{1,0}$ / Matrix block $S_{1,1}$

| 1 | 1 | 1 | 0 | 0 | 0 | 0 | 0 |
|---|---|---|---|---|---|---|---|
| 0 | 0 | 1 | 1 | 0 | 0 | 0 | 0 |
| 0 | 1 | 0 | 1 | 0 | 0 | 0 | 0 |
| 1 | 0 | 1 | 0 | 0 | 0 | 0 | 0 |
| 0 | 0 | 0 | 0 | 1 | 0 | 0 | 0 |
| 0 | 0 | 0 | 0 | 0 | 1 | 0 | 0 |
| 0 | 0 | 0 | 0 | 0 | 0 | 1 | 0 |
| 0 | 0 | 0 | 0 | 0 | 0 | 0 | 1 |

Sparse matrix S

| 1 | 1 | 1 | 0 | 0 | 0 | 0 | 0 |
|---|---|---|---|---|---|---|---|
| 1 | 1 | 0 | 0 | 0 | 0 | 0 | 0 |
| 1 | 1 | 0 | 0 | 0 | 0 | 0 | 0 |
| 1 | 1 | 0 | 0 | 0 | 0 | 0 | 0 |
| 0 | 0 | 0 | 0 | 1 | 0 | 0 | 0 |
| 0 | 0 | 0 | 0 | 1 | 0 | 0 | 0 |
| 0 | 0 | 0 | 0 | 1 | 0 | 0 | 0 |
| 0 | 0 | 0 | 0 | 1 | 0 | 0 | 0 |

Data matrix $A_3$

| 1 | 2 | 3 | 0 | 0 | 0 | 0 | 0 |
|---|---|---|---|---|---|---|---|
| 3 | 4 | 0 | 0 | 0 | 0 | 0 | 0 |
| 2 | 4 | 0 | 0 | 0 | 0 | 0 | 0 |
| 1 | 3 | 0 | 0 | 0 | 0 | 0 | 0 |
| 0 | 0 | 0 | 0 | 1 | 0 | 0 | 0 |
| 0 | 0 | 0 | 0 | 2 | 0 | 0 | 0 |
| 0 | 0 | 0 | 0 | 3 | 0 | 0 | 0 |
| 0 | 0 | 0 | 0 | 4 | 0 | 0 | 0 |

Index matrix $A_4$

| 1 | 1 | 1 | 1 | 0 | 0 | 0 | 0 |
|---|---|---|---|---|---|---|---|
| 1 | 1 | 1 | 1 | 0 | 0 | 0 | 0 |
| 0 | 0 | 1 | 0 | 0 | 0 | 0 | 0 |
| 0 | 0 | 0 | 0 | 0 | 0 | 0 | 0 |
| 0 | 0 | 0 | 0 | 1 | 1 | 1 | 1 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Data matrix $B_3$

| 1 | 1 | 1 | 2 | 0 | 0 | 0 | 0 |
|---|---|---|---|---|---|---|---|
| 4 | 3 | 2 | 3 | 0 | 0 | 0 | 0 |
| 0 | 0 | 4 | 0 | 0 | 0 | 0 | 0 |
| 0 | 0 | 0 | 0 | 0 | 0 | 0 | 0 |
| 0 | 0 | 0 | 0 | 1 | 2 | 3 | 4 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Index matrix $B_4$

FIG. 4

A sparse matrix processing unit inputs, to a sparse vector operation unit, a first data matrix and a first index matrix that correspond to a first sparse matrix and that are obtained through processing by the sparse matrix processing unit, and a second data matrix and a second index matrix that correspond to a second sparse matrix and that are obtained through processing by the sparse matrix processing unit    ⌐ 501

The sparse vector operation unit determines, based on each row of non-zero elements in the first index matrix and each column of non-zero elements included in the second index matrix, target elements on which a dot product operation needs to be performed in each row of non-zero elements in the first data matrix and each column of non-zero elements in the second data matrix, and performs a dot product operation on the target elements, to obtain a first result matrix of performing a sparse multiplication operation on the first sparse matrix and the second sparse matrix    ⌐ 502

FIG. 5

Sparse matrix processing unit

Sparse vector operation unit

Processor 204

FIG. 6

A sparse matrix processing unit obtains a third data matrix and a third index matrix that correspond to a third sparse matrix, and a fourth data matrix and a fourth index matrix that correspond to a fourth sparse matrix

701

The sparse matrix processing unit determines a Cartesian product of a first data matrix tile of a non-zero matrix tile in an $i^{th}$ row of the third data matrix and a second data matrix tile of a non-zero matrix tile in a $j^{th}$ column of the fourth data matrix

702

The sparse matrix processing unit determines that a first data matrix tile and a second data matrix tile that are included in a group of data matrix tiles in the Cartesian product are respectively the first data matrix and the second data matrix, a first index matrix tile corresponding to the first data matrix tile is the first index matrix, and a second index matrix tile corresponding to the second data matrix tile is the second index matrix

703

The sparse matrix processing unit performs summation on first result matrices corresponding to all groups of data matrix tiles included in the Cartesian product, to obtain a matrix tile in an $i^{th}$ row and a $j^{th}$ column in a second result matrix of performing a sparse multiplication operation on the third sparse matrix and the fourth sparse matrix

704

FIG. 7

| 1 | 1 | 1 | 0 | 0 | 0 | 0 | 0 |
|---|---|---|---|---|---|---|---|
| 1 | 1 | 0 | 0 | 0 | 0 | 0 | 0 |
| 1 | 1 | 0 | 0 | 0 | 0 | 0 | 0 |
| 1 | 1 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |
| 1 | 0 | 0 | 0 | 0 | 0 | 0 | 0 |

Data matrix $A_1$

| 1 | 1 | 1 | 1 | 1 | 1 | 1 | 1 |
|---|---|---|---|---|---|---|---|
| 1 | 1 | 1 | 1 | 0 | 0 | 0 | 0 |
| 0 | 0 | 1 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Data matrix $B_1$

| 1 | 2 | 3 | 0 | 0 | 0 | 0 | 0 |
|---|---|---|---|---|---|---|---|
| 3 | 4 | 0 | 0 | 0 | 0 | 0 | 0 |
| 2 | 4 | 0 | 0 | 0 | 0 | 0 | 0 |
| 1 | 3 | 0 | 0 | 0 | 0 | 0 | 0 |
| 5 | 0 | 0 | 0 | 0 | 0 | 0 | 0 |
| 6 | 0 | 0 | 0 | 0 | 0 | 0 | 0 |
| 7 | 0 | 0 | 0 | 0 | 0 | 0 | 0 |
| 8 | 0 | 0 | 0 | 0 | 0 | 0 | 0 |

Index matrix $A_2$

| 1 | 1 | 1 | 2 | 5 | 6 | 7 | 8 |
|---|---|---|---|---|---|---|---|
| 4 | 3 | 2 | 3 | 0 | 0 | 0 | 0 |
| 0 | 0 | 4 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Index matrix $B_2$

Second result matrix C

FIG. 8

| 1 | 1 | 1 | 0 | 0 | 0 | 0 | 0 |
|---|---|---|---|---|---|---|---|
| 1 | 1 | 0 | 0 | 0 | 0 | 0 | 0 |
| 1 | 1 | 0 | 0 | 0 | 0 | 0 | 0 |
| 1 | 1 | 0 | 0 | 0 | 0 | 0 | 0 |
| 0 | 0 | 0 | 0 | 1 | 0 | 0 | 0 |
| 0 | 0 | 0 | 0 | 1 | 0 | 0 | 0 |
| 0 | 0 | 0 | 0 | 1 | 0 | 0 | 0 |
| 0 | 0 | 0 | 0 | 1 | 0 | 0 | 0 |

Data matrix A₃

| 1 | 1 | 1 | 1 | 0 | 0 | 0 | 0 |
|---|---|---|---|---|---|---|---|
| 1 | 1 | 1 | 1 | 0 | 0 | 0 | 0 |
| 0 | 0 | 1 | 0 | 0 | 0 | 0 | 0 |
| 0 | 0 | 0 | 0 | 0 | 0 | 0 | 0 |
| 0 | 0 | 0 | 0 | 1 | 1 | 1 | 1 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Data matrix B₃

FIG. 9

| 1 | 1 | 1 | 2 | 0 | 0 | 0 | 0 |
|---|---|---|---|---|---|---|---|
| 4 | 3 | 2 | 3 | 0 | 0 | 0 | 0 |
| 0 | 0 | 4 | 0 | 0 | 0 | 0 | 0 |
| 0 | 0 | 0 | 0 | 0 | 0 | 0 | 0 |
| 0 | 0 | 0 | 0 | 1 | 2 | 3 | 4 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Index matrix B₄

| 1 | 2 | 3 | 4 |   |   |   |   |
|---|---|---|---|---|---|---|---|
| 1 | 2 | 3 | 4 |   |   |   |   |
| 1 | 2 | 3 | 4 |   |   |   |   |
| 1 | 2 | 3 | 4 |   |   |   |   |
|   |   |   |   | 1 | 2 | 3 | 4 |
|   |   |   |   | 1 | 2 | 3 | 4 |
|   |   |   |   | 1 | 2 | 3 | 4 |
|   |   |   |   | 1 | 2 | 3 | 4 |

Result index matrix C₄

FIG. 10

## INTERNATIONAL SEARCH REPORT

| International application No. |
|---|
| **PCT/CN2024/101040** |

**A. CLASSIFICATION OF SUBJECT MATTER**

G06F 17/16(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 稀疏矩阵, 索引, 数值, 数据, 矩阵, 向量, 点积, 内积, 非零, 块, sparse matrix, index, numeric, data, matrix, vector, dot product, inner product, non-zero, block

**C. DOCUMENTS CONSIDERED TO BE RELEVANT**

| Category* | Citation of document, with indication, where appropriate, of the relevant passages | Relevant to claim No. |
|---|---|---|
| A | CN 114691083 A (ANHUI CAMBRICON INFORMATION TECHNOLOGY CO., LTD.) 01 July 2022 (2022-07-01) claims 1-3, and description, paragraphs 37-69 | 1-15 |
| A | CN 110489428 A (SHANGHAI ENFLAME INTELLIGENT TECHNOLOGY CO., LTD.) 22 November 2019 (2019-11-22) entire document | 1-15 |
| A | CN 112835552 A (SCIENTREE INFORMATION TECHNOLOGY CO., LTD.) 25 May 2021 (2021-05-25) entire document | 1-15 |
| A | US 10936311 B1 (XILINX, INC.) 02 March 2021 (2021-03-02) entire document | 1-15 |
| A | US 2020159810 A1 (HEWLETT PACKARD ENTERPRISE DEVELOPMENT LP) 21 May 2020 (2020-05-21) entire document | 1-15 |

☐ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **21 August 2024** | **12 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101040**

| Patent document cited in search report | | | Publication date (day/month/year) | Patent family member(s) | Publication date (day/month/year) |
|---|---|---|---|---|---|
| CN | 114691083 | A | 01 July 2022 | None | |
| CN | 110489428 | A | 22 November 2019 | None | |
| CN | 112835552 | A | 25 May 2021 | None | |
| US | 10936311 | B1 | 02 March 2021 | None | |
| US | 2020159810 | A1 | 21 May 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310781382

- CN 202311240428